# EUROPÄISCHE PATENTSCHRIFT

(11) **EP 1 838 484 B1**
(45) Veröffentlichungstag und Bekanntmachung des Hinweises auf die Patenterteilung: **06.10.2010**
(21) Anmeldenummer: 05826459.9
(22) Anmeldetag: 22.12.2005
(51) Int. Cl.: B23K 11/11

(54) **VERFAHREN UND VORRICHTUNG ZUM ELEKTRISCHEN PUNKTSCHWEISSEN**
METHOD AND DEVICE FOR ELECTRICAL SPOT WELDING
PROCEDE ET DISPOSITIF DE SOUDAGE ELECTRIQUE PAR POINTS

(30) Priorität: 11.01.2005 DE 102005001341
(43) Veröffentlichungstag der Anmeldung: 03.10.2007
(73) Patentinhaber: KUKA Systems GmbH, 86165 Augsburg (DE)
(72) Erfinder: RIPPL, Peter, 86163 Augsburg (DE)
(74) Vertreter: Ernicke, Klaus Stefan
(86) Internationale Anmeldenummer: PCT/EP2005/013946
(87) Internationale Veröffentlichungsnummer: WO 2006/074801

(56) Entgegenhaltungen:
- US-A- 5 541 382
- US-A- 5 945 011

## Beschreibung

Die Erfindung betrifft ein Verfahren und eine Vorrichtung zum elektrischen Punktschweißen von Werkstücken mittels Schweißzangen mit den Merkmalen im Oberbegriff des Verfahrens- und Vorrichtungshauptanspruchs.

Eine solche Punktschweißtechnik mit elektrischen Punktschweißzangen, z.B. C-Zangen oder X-Zangen, ist aus der Praxis und der DE 38 03 502 C1 bekannt. Bei dieser Schweißtechnik werden mehrere Schweißpunkte hintereinander entlang einer Bahn am Werkstück, insbesondere einem Fahrzeugkarosserieteil gesetzt. Das Werkstück und die Schweißzange werden dabei von ein oder mehreren mehrachsigen Robotern, insbesondere in Form von sechsachsigen Gelenkarmrobotern, relativ zueinander bewegt. In der einen Variante führt der Roboter die Schweißzange gegenüber dem stehenden Werkstück. In der zweiten Variante bewegt der Roboter das Werkstück gegenüber einer stationären Schweißzange. In einer dritten Variante können sowohl die Schweißzange, wie auch das Werkstück von jeweils einem Roboter relativ zueinander bewegt werden. Bei dieser Relativbewegung wird eine Versatzbewegung zwischen Werkstück und Schweißzange entlang der Bahn zum Anfahren der einzelnen Schweißpositionen durchgeführt. Beim Stand der Technik werden an der Schweißstelle Werkstück und Schweißzange relativ zueinander positioniert, wobei dann eine Ruhestellung ohne weitere Versatzbewegung eingenommen wird. Beim Schließen der Schweißzange und beim Schweißprozess bleibt die Relativposition von Schweißzange und Werkstück erhalten.

Die US 5,945,011 A befasst sich mit einem Teachen von Schweißpunkten einer Schweißzange und lehrt dabei ein Ausweichen der Schweißzange und ihrer Elektroden gegenüber Hindernissen im Bahnverlauf, wobei die Schweißzange unterschiedlich weit geöffnet werden muss.

Aus der US 5,541,382 A ist eine Dreh- und Vibrationseinrichtung für Elektroden zum Aufbrechen von Oxidschichten beim Punktschweißen bekannt. Die Elektrode ist Bestandteil eines Punktschweißapparates und wird nach dem Ansetzen am Werkstück während des Schweißens und des Stromdurchgangs relativ zu einem Stützarm gedreht.

Die DE 690 11 359 T2 beschreibt ein Verfahren zum Widerstandspunktschweißen, bei dem die Elektrodenspitzen durch eine Kombination aus Kippen und Drehen neu positioniert werden, um durch Verschiebung und Erneuerung der Elektrodenkontaktflächen die Lebensdauer der Elektrodenspitze zu verlängern.

In der DE 197 29 968 C1 ist eine stationäre Schweißmaschine angesprochen, deren untere Elektrode um einen bestimmten Drehwinkel um eine Drehachse gedreht wird. Die untere Elektrode ist hierfür auf einer Spannplatte angeflanscht, wobei die Spannplatte und die Elektrode von einer Linearantriebseinheit gemeinsam gedreht werden können.

Die JP 2001-105 153 A offenbart ein Verfahren und eine Einrichtung zum elektrischen Punktschweißen von Werkstücken mit Lerneffekt, wobei ein Gelenkarmroboter eine Schweißzange mit Elektroden gegenüber einem stationär gehaltenen Werkstück bewegt und Schweißpunkte setzt. Hierbei sollen Fehlpositionen der Schweißzange und damit einhergehende unerwünschte Verformungen des Werkstücks beim Schließen der Schweißzange vermieden werden, wobei Lageabweichungen der Schweißpunkte am Werkstück festgestellt und korrigiert werden sowie verformte Flansche korrekt geschweißt werden.

Die EP 0 644 014 A1 zeigt einen Roboter mit einer Schweißzange mit synchroner Operation, wobei das Ankommen der Schweißelektroden am Schweißpunkt und die Vollendung der Andruckphase zusammenfallen. Die Schweißzange wird beim Anfahren und Setzen der Schweißpunkte in der üblichen Weise quer zur Bahnrichtung bewegt, wobei die Versatzbewegung unterbrochen ist.

Die DE 692 20 409 T2 befasst sich mit einem Ausweichen der Schweißzange an Hindernissen. Hierbei wird die Schweißzange zum Umfahren eines Buckels oder eines anderen Hindernisses weiter als gewöhnlich geöffnet. Das eigentliche Öffnen und Schließen der Zange für den Schweißprozess findet bei stehender Schweißzange und unterbrochener Versatzbewegung statt.

Es ist Aufgabe der vorliegenden Erfindung, eine bessere Technik zum elektrischen Punktschweißen aufzuzeigen.

Die Erfindung löst diese Aufgabe mit den Merkmalen im Verfahrensanspruch 1 und im vorrichtungshauptanspruch 9.

Durch die Relativbewegung zwischen Werkstück und Schweißzange, insbesondere zwischen Werkstück und Elektroden, beim Ansetzen der Schweißpunkte ergeben sich verschiedene Effekte und Vorteile. Zum einen wird Zeit gespart. Es ergeben sich deutlich kürzere Taktzeiten bei gleichzeitig reduzierter Maschinenbelastung. Bei der Versatzbewegung sind hohe und weitgehend konstante Bewegungsgeschwindigkeiten bei deutlich reduzierten Beschleunigungs- und Abbremsphasen erreichbar. Hierdurch ergibt sich ein geringerer Verschleiß. Zudem kann durch die Relativbewegung zwischen Elektroden und Werkstück im Schweißprozess eine bessere Punktschweißqualität erreicht werden.

Die kürzeren Taktzeiten ermöglichen eine bessere Auslastung der Schweißroboter. Zudem kann die erforderliche Zahl von Robotern und Schweißzangen in einer Schweißstation bzw. einer Fertigungslinie aus mehreren Stationen reduziert werden. Für die Roboter hat die vergleichmäßigte Versatzbewegung kinematische Vorteile. Das bei konventionellen Verfahren übliche unkontrollierte Nachschwingen oder Zittern des Roboters bei Beginn der Schweißung kann reduziert werden. In schweißtechnischer Hinsicht ergeben sich eine höhere Lebensdauer der Elektrodenkappen und die vorerwähnte Verbesserung in der Punktschweißqualität. Diese Vorteile stellen sich insbesondere beim Schweißen von zinkbeschichteten Blechen ein, da sich die Anlegierung durch Zink an der Elektrodenkappe besser verhält als das unkontrollierte sporadische Abplatzen der Fremdschicht von der Kappenoberfläche, wie dies beim Stand der Technik der Fall ist. Beim Widerstandspunktschweißen von Aluminium ist diese Anlegierung ein noch größeres Problem beim Stand der Technik und reduziert die Zahl der mit einem Elektrodensatz möglichen Schweißpunkte.

Mit der erfindungsgemäßen Schweißtechnik kann die Schweißpunktzahl und die Standfestigkeit der Elektrodenkappen erhöht werden. Dies bringt insbesondere beim Aluminiumschweißen deutliche Verbesserungen und erweiterte Einsatzmöglichkeiten für den Prozess. Günstig ist in diesem Zusammenhang auch der geringere Anfall von Nacharbeiten an den Werkstücken.

Die Relativdrehung der angepressten Elektroden gegenüber dem Werkstück hat außerdem technologische Vorteile. Die Reproduzierbarkeit der elektrischen Schweißparameter wird durch die Drehung verbessert. Dies führt zu einer Vergleichmäßigung der Schweißergebnisse und zu einer Qualitätssteigerung. Das bislang übliche Steppen, d.h. die stufenweise Anpassung der Schweißspannung bzw. des Schweißstroms zum Ausgleich schwankender Schweißparameter bei betriebsbedingter Vergrößerung der Elektrodenwirkfläche kann verringert werden oder entfallen.

Das Drehen der Elektroden am Schweißpunkt mindert oder verhindert das bislang übliche Anlegieren von Werkstückmaterialien an den Elektroden sowie die damit einher gehende Änderung der Prozessbedingungen. Außerdem können beim konventionellen Widerstandspunktschweißen diese Anlegierungen irgendwann unkontrolliert abplatzen, was zu einer weiteren und sprunghaften Änderung der Prozessbedingungen führen kann. Durch die Drehung der Elektroden an der Kontakt- und Schweißstelle werden diese negativen Einwirkungen verringert oder aufgehoben.

Beim konventionellen Widerstandspunktschweißen ergibt sich ein Elektrodenkappenverschleiß, wobei die Kontakt- und Wirkflächen der Elektroden sich abplatten und schärfere Ränder bilden. Dies führt durch die Flächenvergrößerung zu einem Sinken der Stromdichte, dem mit einem entsprechenden Steppen des Schweißstroms bzw. der Schweißspannung entgegen gewirkt wird. Durch das Drehen der Elektroden an der Kontakt- und Schweißstelle werden diese Probleme behoben. Die Kantenbildung wird vermieden, wobei die Elektroden sich eher in prozessgünstiger Weise verrunden. Außerdem bleibt bei der erfindungsgemäßen Schweißtechnik die Stromdichte länger konstant und verändert sich nicht in unkontrollierbarer Weise über die Standzeit. Im Gegenteil stellt sich heraus, dass die Stromdichte eine Abhängigkeit vom Drehwinkel der Elektrode an der Schweißstelle hat. Je nach Drehwinkel kann die Stromdichte sogar steigen. Dies wiederum bietet die Möglichkeit, die Stromdichte über die Elektrodendrehung und den Drehwinkel zu beeinflussen und auf einen gewünschten Wert einzustellen. Die Drehbewegung kann hierbei ggf. diskontinuierlich, eventuell reversierend sein. In einem solchen Fall würden technologische Vorteile zu Lasten der Taktzeitersparnis im Vordergrund stehen.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen:
- Figur 1:: Eine Schweißeinrichtung mit Roboter, Punktschweißzange und Werkstück in einer schematischen Seitenansicht,
- Figur 2 und 3:: einen Bewegungsablauf von Elektroden und Zangenarmen beim Setzen von mehreren Schweißpunkten entlang einer geraden Bahn in Seitenansicht und Draufsicht,
- Figur 4:: einen Bewegungsablauf von Elektroden und Zangenarmen in Draufsicht entlang einer gebogenen Bahn,
- Figur 5:: ein Diagramm für den Kraftverlauf und Bewegungen einer Schweißzange beim Setzen eines Schweißpunktes in konventioneller Weise und
- Figur 6:: ein entsprechendes Diagramm für das erfindungsgemäße Schweißverfahren.

Die Erfindung betrifft ein Verfahren zum elektrischen Punktschweißen von Werkstücken (2) sowie eine hierfür eingesetzte und entsprechend gesteuerte Schweißeinrichtung (1), die eine entsprechend geeignete Steuerung (4) und ein Steuerprogramm enthält.

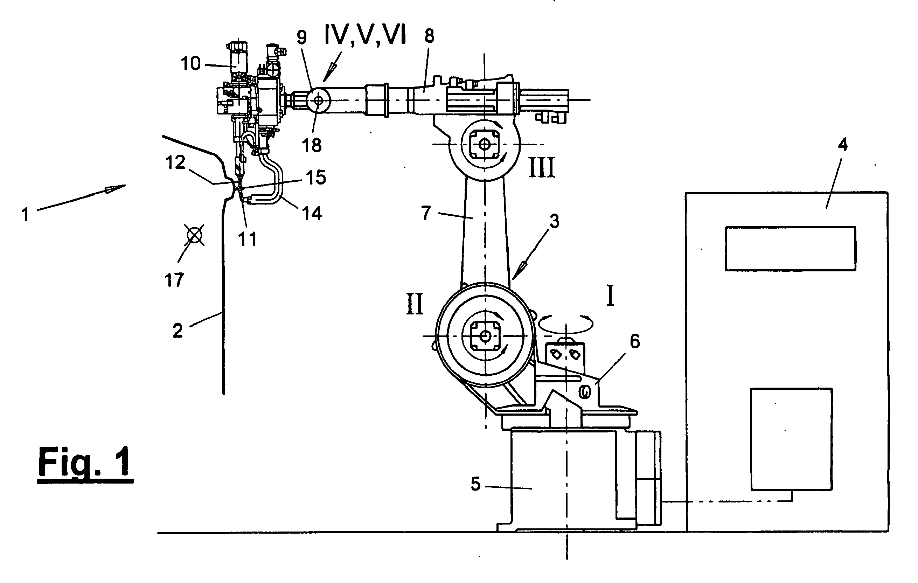

Figur 1 zeigt eine solche Schweißeinrichtung (1) in einer schematischen Ausführungsform in Seitenansicht. Die Schweißeinrichtung (1) umfasst eine Schweißzange (10) zum elektrischen Punktschweißen und einen Roboter (3) mit einer Steuerung (4), welcher die Schweißzange (10) im gezeigten Ausführungsbeispiel relativ zu einem abgebrochen dargestellten Werkstück (2) führt. Hierbei werden mit der Schweißzange (10) mehrere Schweißpunkte (15) entlang einer Bahn (16) am Werkstück (2) gesetzt. Die Schweißzange (10) wird hierbei vom Roboter (3) in einer Versatzbewegung von Schweißpunkt (15) zu Schweißpunkt (15) bewegt.

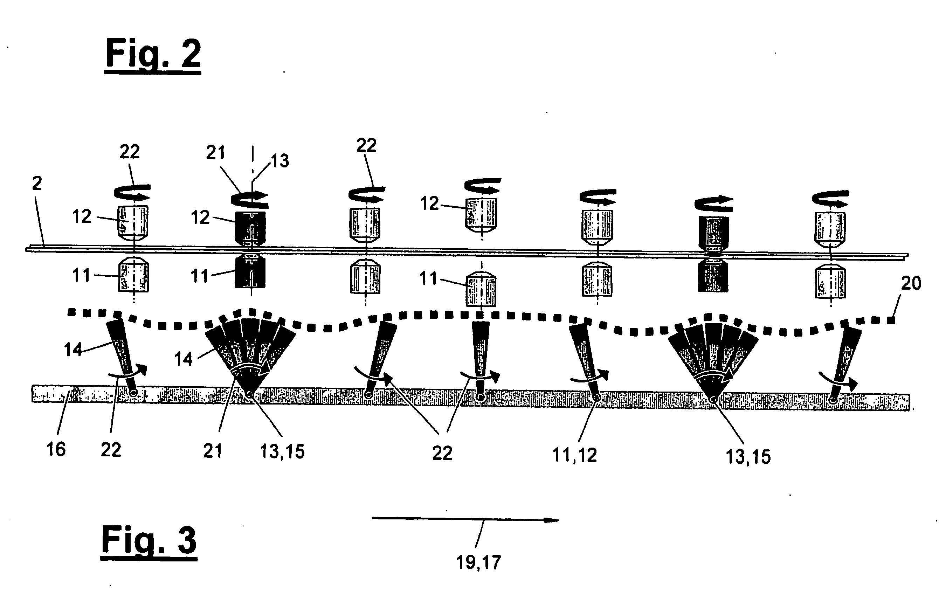

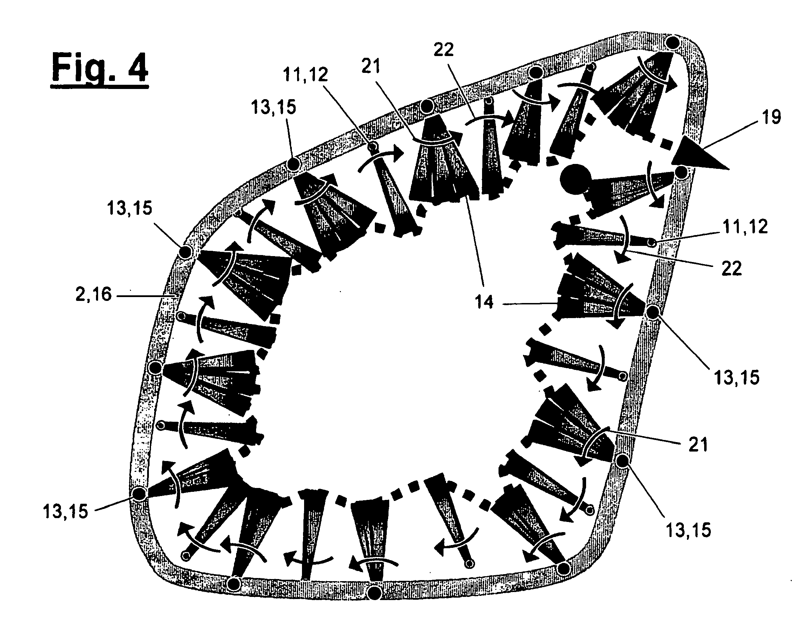

Das Werkstück (2) kann von beliebiger Art, Größe und Ausbildung sein. Vorzugsweise handelt es sich um Bauteile von Fahrzeugrohkarosserien. Hierbei werden beispielsweise zwei Bauteile an einem abstehenden Flansch mittels Schweißpunkten (15) miteinander verbunden. Die am Werkstück (2) zu setzende Bahn (16) oder Reihenfolge von Schweißpunkten (15) wird durch die Bauteilgeometrie bestimmt. Die Bahn (16) kann in der einfachsten Form wie in Figur 2 und 3 einen geraden und ebenen Verlauf haben. Sie kann andererseits eine beliebige andere Formgebung haben und z.B. den in Figur 4 gezeigten gekrümmten Verlauf haben. Figur 4 verdeutlicht beispielsweise eine innenliegende Bauteilöffnung, z.B. einen Türausschnitt einer Karosserie, an deren umlaufenden Rand die besagten Schweißpunkte (15) zu setzen sind.

Unter dem sog. Setzen eines Schweißpunktes wird der Vorgang bzw. der Funktionsablauf ab dem Beginn des Schließens der Zangenarme (14) der Schweißzange (10) mit der nachfolgenden Anpress- und Schweißphase bis zum Abschluss der Öffnung der Schweißzange (10) verstanden.

Der Roboter (3) kann von beliebig geeigneter Bauart sein. Vorzugsweise handelt es sich um einen mehrachsigen Industrieroboter, insbesondere um einen Gelenkarmroboter mit mindestens sechs rotatorischen Achsen. Der Roboter (3) kann ggf. Zusatzachsen, insbesondere eine oder mehrere zusätzliche Fahrachsen, besitzen. Der Roboter (3) hat in der bevorzugten Ausführungsform ein Gestell (5), auf dem um eine erste aufrechte Hauptachse oder Roboterachse I ein Karussell (6) drehbar gelagert ist. Am Karussell (6) ist um eine zweite Hauptachse oder Roboterachse II eine Schwinge (7) schwenkbar gelagert. Die Achse II erstreckt sich vorzugsweise horizontal und quer zur Achse I. Am anderen Schwingenende ist ein Ausleger (8) um eine ebenfalls horizontale dritte Roboterachse oder Hauptachse III schwenkbar gelagert. Am vorderen Ende des Auslegers (8) befindet sich eine Roboterhand (9), die ihrerseits mehrere Bewegungsachsen oder Handachsen aufweist. In der bevorzugten Ausführungsform handelt es sich um eine dreiachsige Roboterhand (9) mit drei orthogonalen Handachsen IV, V und VI, die sich im Handwurzelpunkt (18) schneiden. Insgesamt hat damit der gezeigte Roboter (3) sechs rotatorische Achsen I bis VI.

An dem um die Handachse VI drehbaren Abtriebsflansch der Roboterhand (9) ist die Schweißzange (10) montiert. Die Schweißzange (10) ist z.B. eine elektrische Punktschweißzange, die zwei oder mehr Elektroden (11,12) und zwei oder mehr Zangenarme (14) aufweist. Figur 1 zeigt eine Schweißzange (10) in einer sog. C-Bauweise mit einer feststehenden Elektrode (11) und einem zugehörigen festen Zangenarm (14) sowie einer linear zustellbaren beweglichen Elektrode (12) und deren Zangenarm. Zum Schweißen eines Schweißpunktes (15) werden die Elektroden (11,12) an das Werkstück (2) heranbewegt und beidseits an die Werkstückoberfläche gedrückt, wobei ein elektrischer Schweißstrom durch das Werkstück geleitet wird, welcher an der Kontaktstelle der Werkstückteile zu einer lokalen Erwärmung und Plastifizierung der sich berührenden Werkstückoberflächen sowie zur Bildung eines Schweißpunktes (15) mit einer sog. Schweißlinse führt.

Der Roboter (3) ist mit einer Robotersteuerung (4) ausgerüstet, die eine computergestützte Recheneinheit mit Daten- und Programmspeichern und ein Steuerprogramm zur Steuerung des Roboters (3) und der Schweißzange (10) enthält. Die Steuerung der Achsen I bis VI des Roboters (3) erfolgt nach Maßgabe eines gespeicherten Bewegungsprogramms. In die Robotersteuerung (4) kann auch eine Prozesssteuerung für den Schweißprozess integriert sein, mit der die Schweißzange (10) und eine nicht dargestellte Schweißstromquelle gesteuert werden. Die Prozesssteuerung kann alternativ extern angeordnet und mit der Robotersteuerung (4) gekoppelt sein. In der Robotersteuerung (4) ist die zu verfolgende Bahn (16) und die Lage der einzelnen Schweißpunkte (15) gespeichert. In der Schweißsteuerung sind die an jedem Schweißpunkt (15) erforderlichen Schweißparameter und Zangensteuerparameter hinterlegt. Die nötigen Prozessparameter können ggf. auch an Ort und Stelle in Reaktion auf die in geeigneter Weise gemessenen lokalen Eigenschaften des Werkstücks anhand einer Technologiedatenbank ermittelt und eingestellt werden. Das Steuerprogramm koppelt in der nachfolgend beschriebenen Weise die Roboterbewegungen und den Schweißprozess.

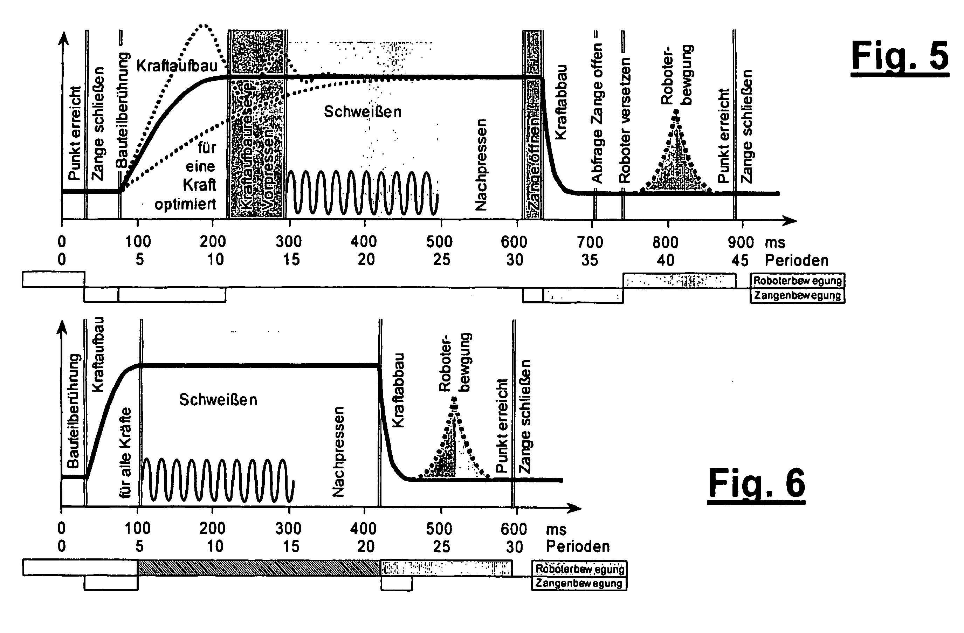

Figur 5 verdeutlicht in einem Diagramm den Bewegungs- und Funktionsablauf einer konventionellen Schweißzange (10) nach dem Stand der Technik, wobei die Funktionen und die Zangen- bzw. Elektrodenkraft über der Zeit aufgetragen sind.
Beim Stand der Technik wird zunächst vom Roboter (3) die Schweißzange (10) in einer Versatzbewegung an die vorgesehene Schweißstelle bzw. den zu fügenden Punkt bewegt und dort positioniert. Sobald der Fügepunkt erreicht ist, bleibt der Roboter (3) stehen und bewegt die Schweißzange (10) nicht weiter relativ zum Werkstück (2). Nach Erreichen des Fügepunktes wird gemäß Diagramm der Befehl zum Schließen der Zange gegeben. Dabei wird z.B. die bewegliche Elektrode (12) auf die feste Elektrode (11) und den Zangenarm (14) zubewegt. Wenn die bewegte Elektrode (12) das Werkstück (2) berührt, wird bei ggf. freigeschaltetem Zangenausgleich die feste Elektrode (11) unter Einwirkung des Zangenantriebs gegen das Werkstück (2) bewegt. Nach Kontakt beider Elektroden (11,12) mit dem Werkstück (2) erfolgt der Kraftaufbau zwischen den beidseitig vom Zangenantrieb angepressten Elektroden. Kraftspitzen werden bei pneumatischen Zangenantrieben durch einstellbare Drosseln vermieden, verhindern jedoch einen für die Taktzeit schnellstmöglichen Kraftaufbau. Im Anschluss an diese Schließbewegung läuft die Vorhaltezeit mit dem sog. Vorpressen der Werkstückteile und der Kraftaufbaureserve. Bei unterschiedlich vorgewählten Kräften können unterschiedliche Kraftaufbauzeiten vorliegen, die durch diese Zeitreserve egalisiert werden, um nicht im Bereich veränderlicher und zu niedriger Elektrodenkräfte zu schweißen.

Anschließend findet der eigentliche Schweißprozess statt, an den sich ein Nachpressen anschließt, innerhalb dem der Schweißpunkt (15) aus dem teigigen Zustand in die feste Phase übergeführt wird. Im nächsten Abschnitt wird die Zangenöffnung angestartet, die ebenfalls eine gewisse Zeit benötigt und dann zum tatsächlichen Kraftabbau und zum Abheben der Elektroden (11,12) vom Werkstück (2) führt. Zu einem nachfolgenden Zeitpunkt wird ein Signal von der Schweißzange (10) über die tatsächlich erfolgte Zangenöffnung abgegeben. Anschließend wird die nächste Roboterversatzbewegung und die Anfahrt zum nächsten Schweißpunkt gestartet. Der Roboter (3) beschleunigt die an der Versatzbewegung beteiligten Achsen I bis VI aus dem Stillstand, wobei je nach Anlagenzustand unterschiedliche Achsen zu führenden Achsen werden können. Hierbei treten erhebliche Beschleunigungen auf. Je nach Abstand zwischen den Schweißpunkten (15) erfolgt dann früher oder später der Abbremsvorgang am nächsten Fügepunkt.

Je nach Punktabstand kommt der Roboter (3) häufig nicht auf seine maximale Versatzgeschwindigkeit. Am nächsten, Fügepunkt findet der vorbeschriebene Vorgang erneut statt. Bei dieser vorbekannten Schweißtechnik bewegt der Roboter (3) die große Masse der Schweißzange (10) ständig zwischen maximaler Beschleunigung in der Versatzbewegung und Stillstand für den Schweißvorgang. Bei einer vergleichsweise kurzen Schweißzeit von z.B. 0,2 sec ist die kalkulierte und tatsächlich benötigte Zeit für die Versatzbewegung in der Regel um ein Vielfaches länger als die reine Schweißzeit und kann z.B. bei ca. 2 sec liegen. Diese langen Versatzzeiten oder sog. Punkt-zu-Punktzeiten erhöhen die Taktzeit beim Stand der Technik und zwingen andererseits dazu, die Beschleunigungs- und Kraftreserven des Roboters (3) auszureizen. Diese höhere Roboterbelastung kann ein "Zittern" des Roboters (3) im Stillstand und beim Schließen der Schweißzange (10) zur Folge haben. Der Schweißpunkt (15) wird dabei u.U. nicht exakt angefahren.

Beim erfindungsgemäßen Verfahren werden das Werkstück (2) und die Schweißzange (10) beim Setzen der Schweißpunkte (15) entlang der Bahn (16) relativ zueinander bewegt. Dies bedeutet, dass im Bereich zwischen Schließen und erneutem Öffnen der Schweißzange (10) eine Relativbewegung und eine Führungsbewegung zwischen Werkstück (2) und Schweißzange (10) stattfindet.

Für diese Relativbewegung beim Setzen der Schweißpunkte (15) gibt es verschiedene Möglichkeiten. Insbesondere werden das Werkstück (2) und die Schweißzange (10) dabei relativ zueinander gedreht. Bei diesen genannten Relativbewegungen kann wahlweise die Schweißzange (10) wie in der gezeigten Ausführungsform relativ zu dem in Ruhe befindlichen Werkstück (2) bewegt werden. Alternativ ist es möglich, das Werkstück (2) mit dem Roboter (3) mittels eines geeigneten Greifers zu führen und relativ zu einer stationären Schweißzange (10) zu bewegen. In einer dritten Variante kann ein Roboter (3) eine Schweißzange (10) und ein anderer Roboter das Werkstück (2) halten, führen und ggf. auch beim Setzen der Schweißpunkte bewegen. Nachfolgend wird die bildlich dargestellte Variante mit der vom Roboter (3) bewegten Schweißzange (10) erläutert. Die geschilderten Vorgänge und Maßnahmen gelten entsprechend auch für die anderen beiden Varianten.

Wie Figur 2 bis 4 verdeutlichen, kann zum einen die Schweißzange (10) in geschlossener Stellung und mit angepressten Elektroden (11,12) um den Schweißpunkt (15) relativ zum Werkstück (2) gedreht werden. Diese Drehbewegung findet z.B. während der Phasen des Kraftaufbaus, des Vorpressens, des Schweißens und des Nachpressens statt. Es findet eine Überlagerung der Zangenbewegung und des Schweißprozesses statt.

In der bevorzugten Ausführungsform geschieht die Relativbewegung während der gesamten Kontaktphase zwischen Elektroden (11,12) und Werkstück (2). Alternativ kann die Relativbewegung nur in einzelnen dieser Phasen stattfinden. Die relative Drehbewegung um den Schweißpunkt (15) ist dabei in Verfolgungsrichtung (17) der Bahn (16) und damit in Richtung zum nächsten anzufahrenden Schweißpunkt (15) gerichtet. Bei dieser Relativdrehung werden auch die Zangenarme (14) um den Schweißpunkt (15) und um die durch die Kontaktstellen der Elektroden (11,12) verlaufende Elektrodenachse (13) gedreht. Die Drehachse kann senkrecht zur beaufschlagten Werkstückoberfläche verlaufen. Sie kann alternativ aber auch einen anderen Winkel aufweisen und schräg stehen. Figur 3 und 4 verdeutlichen dies durch eine gefächerte und schematische Darstellung der Zangenarme (14).

Zusätzlich kann die Schweißzange (10) beim Öffnen der Zangenarme (14) relativ zum Werkstück (2) gedreht werden. Diese Drehbewegung erfolgt um den Handwurzelpunkt (18) der Roboterhand (9) und ist ebenfalls zum nächsten anzufahrenden Schweißpunkt (15) hingerichtet. Die Achse dieser Drehbewegung ist vorzugsweise im wesentlichen senkrecht zur Bahn (16) bzw. zur Führungsbewegung (20) des Roboters (3) ausgerichtet.

Die Drehbewegung findet auch beim Anfahren eines Schweißpunktes (15) und beim Schließen der Schweißzange (10) und ihrer Zangenarme (14) statt. Die Schweißzange (10) und ihre Zangenarme (14) sind bei diesem Anfahren in Verfolgungsrichtung (17) der Bahn (16) schräg voraus gerichtet. Die Elektroden befinden sich dadurch in Verfolgungsrichtung (17) vor der Roboterhand (9). Während der Öffnungs- und Schließbewegungen der Schweißzange (10) finden somit bereits überlagerte Versatzbewegungen und relative Fahrbewegungen zwischen Schweißzange (10) und Werkstück (2) statt.

In einer abgewandelten Ausführungsform können nur die eingangs genannten relativen Drehbewegungen der Schweißzange (10) gegenüber dem Werkstück (2) um den Schweißpunkt (15) bei Elektrodenkontakt stattfinden, wobei das Öffnen und/oder Schließen der Schweißzange (10) wie beim Stand der Technik in einer relativen Ruhestellung zwischen Schweißzange (10) und Werkstück (2) ausgeführt wird.

Zur Erzielung der geschilderten Relativbewegungen wird der Roboter (3) mit der Roboterhand (9), insbesondere mit dem Handwurzelpunkt (18) über seine ersten Hauptachsen I bis III in einer im wesentlichen konstanten Führungsbewegung (20) entlang der Bahn (16) bewegt, wobei die Roboterhand (9) mit ein oder mehreren ihrer Handachsen IV bis VI eine überlagerte Ausgleichsbewegung (21,22) ausführt. Die Bewegungsüberlagerung hat den Vorteil, dass der Roboter (3) die Möglichkeit hat, nicht oder relativ wenig zum Stillstand zu kommen, so dass hohe Roboterbelastungen durch ständiges Abbremsen und Beschleunigen vermieden werden können.

Bei der Führungsbewegung (20) wird im Zuge einer Drehung der Schweißzange (10) um den Schweißpunkt (15) der Handwurzelpunkt (18) in einem entsprechenden Bogen um den Schweißpunkt (15) herum geführt. Die Führungsbewegung (20) ist insoweit nicht gerade. Ansonsten kann die Führungsbewegung (20) parallel zur Bahn (16) gerichtet sein. Dies ist nicht zwingend. Von der Parallelität kann abgewichen werden, insbesondere in Abhängigkeit von Störkanten oder anderen Werkstückgegebenheiten.

Entsprechend der vorbeschriebenen Ausführungsmöglichkeiten ist die Ausgleichsbewegung der Roboterhand (9) bei geschlossener Schweißzange (10) eine schwenkende Nachführbewegung (21) mit Orientierung um den Schweißpunkt (15). Die zunächst in Fahrtrichtung (17) schräg am Werkstück (2) und am Schweißpunkt (15) positionierte und ausgerichtete Schweißzange (10) wird in Schließstellung um den Schweißpunkt (15) bzw. die Elektrodenachse (13) durch die Weiterbewegung des Roboters und durch die im wesentlichen längs der Bahn (16) gerichtete Führungsbewegung (20) gedreht. Durch die Nachführbewegung (21) der Roboterhand (9) und ggf. eine gewisse Ausweichbewegung der anderen Roboterachsen (1,2,3) werden die im Verlauf der Drehung sich ergebenden Orientierungsänderungen kompensiert.

Die Ausgleichsbewegung der Roboterhand (9) beim Öffnungs- und Schließvorgang der Schweißzange (10) ist eine Orientierungsbewegung (22), bei der die Kinematik umgedreht wird und die Schweißzange (10) relativ zum Werkstück (2) gedreht und zum nächsten Schweißpunkt (15) hin orientiert wird. Diese Orientierungsbewegung (22) läuft relativ schnell und insbesondere schneller als die Führungsbewegung (20) des Roboters (3) ab. Am Ende der Elektrodenkontaktphase am Werkstück (2) und der Drehbewegung um den Schweißpunkt (15) ist die Roboterhand (9) bereits am Schweißpunkt (15) vorbei gewandert, wobei die Zangenarme (14) nach hinten und gegen die Verfolgungsrichtung (17) ausgerichtet sind. In der drehenden Orientierungsbewegung (22) wird die Schweißzange (10) nach Öffnen der Zangenarme (14) schnell umorientiert und in eine vorauseilende Position gebracht, in der sie beim Anfahren des nächsten Schweißpunktes (15) zu diesem hin schräg ausgerichtet ist, wobei sich die Elektroden (11,12) vor der Roboterhand befinden.

Figur 6 verdeutlicht im Diagramm und im Vergleich zum Diagramm von Figur 5 zur konventionellen Technik den Ablauf beim erfindungsgemäßen Verfahren. Mit der beim Anfahren des Schweißpunktes (15) schräg voraus gerichteten Schweißzange (10) findet die Schließbewegung der Elektroden (11,12) und ihre Zangenarme (14) bereits beim Anfahren des Schweißpunktes (15) statt, so dass der Elektrodenkontakt am Werkstück und der Kraftaufbau entsprechend schneller stattfinden können. Dementsprechend beginnt die Schweißphase früher als beim Stand der Technik und kann durch die Relativbewegung zwischen Elektroden (11,12) und Werkstück (2) schneller ablaufen. Beim Öffnen der Schweißzange (10) beginnt bereits wieder die Versatzbewegung und die Orientierungsbewegung (22). Da kleine Orientierungswinkeländerungen an der Roboterhand (9) große Versatzbewegungen der Elektroden (11,12) und des Tool-Center-Points (TCP) der Schweißzange (10) zur Folge haben, kommt es zu sehr kurzen Versatzzeiten. Insgesamt ergibt sich aus dem Vergleich der Diagramme von Figur 5 und 6 eine deutliche Zeitersparnis beim erfindungsgemäßen Verfahren.

Die Größe des Drehwinkels der Elektroden (11,12) am Schweißpunkt (15) und im Kontakt mit dem Werkstück (2) kann nach unterschiedlichen Kriterien bestimmt werden. Wenn die Taktzeitersparnis im Vordergrund steht, empfiehlt sich ein größerer Drehwinkel, der z.B. zwischen 1° bis 45°, typischerweise im Bereich zwischen 15° und 20° liegt. Der Drehwinkel kann sich nach verschiedenen Kriterien richten, z.B. dem Punktabstand und der Zangengröße.

Andererseits ergeben sich durch die Elektrodendrehung Vorteile bei der Reproduzierbarkeit der elektrischen Schweißparameter. Insbesondere ergeben sich winkelabhängig unterschiedliche Stromdichten. Der Drehwinkel am Schweißpunkt (15) kann sich auch nach diesen Prozess- oder Qualitätskriterien richten und kleiner sein als ein Drehwinkel, der für eine Taktzeitersparnis optimal wäre. In diesem Fall wird ein Kompromiss zwischen der Prozessoptimierung beim Schweißen und der Taktzeit gesucht. Alternativ kann sich der Drehwinkel ausschließlich nach der Prozessoptimierung richten.

Die Elektroden (11,12) bzw. Elektrodenkappen können aus beliebig geeigneten Materialien gefertigt sein, z.B. den bisher üblichen Werkstoffen, wie Kupfer, Kupfer-Chromlegierungen oder dgl.. Sie können alternativ in Anpassung an die Drehung an der Schweißstelle besonders hergerichtet, z.B. gehärtet oder beschichtet sein oder aus besonders verschleißfesten und warmfesten Materialien, wie z.B. Edelstahl, Wolfram- oder Molybdän-haltige Legierungen oder dgl. bestehen oder eine solche Beschichtung haben.

Die Elektroden (11,12) können eine drehgünstige Form aufweisen, wobei z.B. die Kontaktfläche ballig verrundet ist. Ein günstiger Verrundungsradius kann z.B. derjenige Radius sein, der sich bei ebenen Kontaktflächen im Betrieb von selbst durch Anlegieren etc. ergibt. Dieser Radius kann aus Standzeitversuchen ermittelt werden.

Abwandlungen der gezeigten Ausführungsformen sind in verschiedener Weise möglich. Dies betrifft zum einen die Ausgestaltung des Roboters (3), der mehr oder weniger Achsen haben kann. Der Roboter (3) kann außerdem je nach Einsatzgebiet eine andere Kinematik besitzen und insbesondere ein oder mehrere Linearachsen oder auch eine Kombination von Linear- und Drehachsen haben. Variabel ist ferner die Ausgestaltung der Schweißzange (10). Sie kann z.B. als X-Schweißzange mit relativ zueinander drehbaren Zangenarmen (14) ausgebildet sein. Daneben sind weitere beliebige Ausgestaltungen möglich.

### BEZUGSZEICHENLISTE

- 1: Schweißeinrichtung
- 2: Werkstück
- 3: Roboter
- 4: Steuerung
- 5: Gestell
- 6: Karussell
- 7: Schwinge
- 8: Ausleger
- 9: Roboterhand
- 10: Schweißzange
- 11: Elektrode fest
- 12: Elektrode beweglich
- 13: Elektrodenachse
- 14: Zangenarm
- 15: Schweißpunkt, Kontaktpunkt
- 16: Bahn
- 17: Verfolgungsrichtung
- 18: Handwurzelpunkt
- 19: Versatzbewegung Schweißzange
- 20: Führungsbewegung Roboter
- 21: Ausgleichsbewegung, Nachführbewegung Roboterhand
- 22: Ausgleichsbewegung, Orientierungsbewegung Roboterhand

- I,II,II: Roboterachsen
- IV,V,VI: Handachsen

## Patentansprüche

1. Verfahren zum elektrischen Punktschweißen von Werkstücken (2) mittels Schweißzangen (10) mit Elektroden (11,12), wobei mehrere Schweißpunkte (15) entlang einer Bahn (16) gesetzt werden und das Werkstück (2) und die Schweißzange (10) in einer Versatzbewegung (19) zwischen den Schweißpunkten (15) von ein oder mehreren mehrachsigen Robotern (3), insbesondere Gelenkarmrobotern, relativ zueinander bewegt werden, wobei das Werkstück (2) und die Schweißzange (10) beim Setzen der Schweißpunkte (15) entlang der Bahn (16) relativ zueinander bewegt werden,
**dadurch gekennzeichnet, dass**
das Werkstück (2) und die Schweißzange (10) bei geschlossener Schweißzange (10) um den Schweißpunkt (15) relativ zueinander gedreht werden.

2. Verfahren nach Anspruch 1, **dadurch gekennzeichnet, dass** das Werkstück (2) und die Schweißzange (10) bei geschlossener Schweißzange (10) um die zwischen den angepressten Elektroden (11,12) verlaufende Elektrodenachse (13) relativ zueinander gedreht werden.

3. Verfahren nach Anspruch 1 oder 2, **dadurch gekennzeichnet, dass** die Drehbewegung um den Schweißpunkt (15) in Verfolgungsrichtung (17) der Bahn (16) gerichtet ist.

4. Verfahren nach einem der vorhergehenden Ansprüche, **dadurch gekennzeichnet, dass** das Werkstück (2) und die Schweißzange (10) beim Öffnen der Schweißzange (10) relativ zueinander gedreht werden.

5. Verfahren nach einem der vorhergehenden Ansprüche, **dadurch gekennzeichnet, dass** das Werkstück (2) und die Schweißzange (10) beim Schließen der Schweißzange (10) relativ zueinander gedreht werden.

6. Verfahren nach einem der vorhergehenden Ansprüche, **dadurch gekennzeichnet, dass** der Roboter (3) mit seinen ersten Hauptachsen I, II, III eine im wesentlichen konstante Führungsbewegung (20) entlang der Bahn (16) und mit seiner mehrachsigen Roboterhand (9) eine überlagerte Ausgleichsbewegung ausführt.

7. Verfahren nach einem der vorhergehenden Ansprüche, **dadurch gekennzeichnet, dass** die Ausgleichsbewegung der Roboterhand (9) bei geschlossener Schweißzange (10) eine Nachführbewegung (21) um den Schweißpunkt (15) ist.

8. Verfahren nach einem der vorhergehenden Ansprüche, **dadurch gekennzeichnet, dass** die Ausgleichsbewegung der Roboterhand (9) bei offener Schweißzange (10) eine Orientierungsbewegung (22) um den Handwurzelpunkt (18) in Richtung zum nächsten Schweißpunkt (15) ist.

9. Einrichtung zum elektrischen Punktschweißen von Werkstücken (2) mit ein oder mehreren mehrachsigen Robotern (3), insbesondere Gelenkarmrobotern, mit einer Steuerung (4) und mit mindestens einer Schweißzange (10) mit Elektroden (11,12), wobei mehrere Schweißpunkte (15) entlang einer Bahn (16) gesetzt werden und das Werkstück (2) und die Schweißzange (10) in einer Versatzbewegung (19) zwischen den Schweißpunkten (15) relativ zueinander bewegbar sind, wobei die Schweißeinrichtung (1) derart gesteuert ist, dass das Werkstück (2) und die Schweißzange (10) beim Setzen der Schweißpunkte (15) entlang der Bahn (16) relativ zueinander bewegt werden,
**dadurch gekennzeichnet, dass**
die Steuerung derart erfolgt, dass das Werkstück (2) und die Schweißzange (10) bei geschlossener Schweißzange (10) um den Schweißpunkt (15) relativ zueinander gedreht werden.

10. Einrichtung nach Anspruch 9, **dadurch gekennzeichnet, dass** die Schweißeinrichtung (1) ein Steuerprogramm zur Durchführung eines Verfahrens nach einem der Ansprüche 1 bis 8 aufweist.

## Claims

1. Method for the electrical spot welding of workpieces (2) by means of welding guns (10) having electrodes (11, 12), wherein a plurality of weld spots (15) are set along a path (16) and the workpiece (2) and the welding gun (10) are moved relative to one another with a displacement movement (19) between the weld spots (15) by one or more multi-axis robots (3), in particular jointed-arm robots, wherein the workpiece (2) and the welding gun (10) are moved relative to one another when setting the weld spots (15) along the path (16), **characterized in that** the workpiece (2) and the welding gun (10) are rotated relative to one another about the weld spot (15) when the welding gun (10) is closed.

2. Method according to Claim 1, **characterized in that** the workpiece (2) and the welding gun (10) are rotated relative to one another about the electrode axis (13) running between the pressed-on electrodes (11, 12) when the welding gun (10) is closed.

3. Method according to Claim 1 or 2, **characterized in that** the rotary movement about the weld spot (15) is directed in the tracking direction (17) of the path (16).

4. Method according to one of the preceding claims, **characterized in that** the workpiece (2) and the welding gun (10) are rotated relative to one another when the welding gun (10) is opened.

5. Method according to one of the preceding claims, **characterized in that** the workpiece (2) and the welding gun (10) are rotated relative to one another when the welding gun (10) is closed.

6. Method according to one of the preceding claims, **characterized in that** the robot (3) performs a substantially constant guide movement (20) along the path (16) with its first main axes I, II, III and a superimposed compensating movement with its multi-axis robot hand (9).

7. Method according to one of the preceding claims, **characterized in that** the compensating movement of the robot hand (9) is a follow-up movement (21) about the weld spot (15) when the welding gun (10) is closed.

8. Method according to one of the preceding claims, **characterized in that** the compensating movement of the robot hand (9) is an orientation movement (22) about the wrist point (18) in the direction of the next weld spot (15) when the welding gun (10) is opened.

9. Device for the electrical spot welding of workpieces (2), comprising one or more multi-axis robots (3), in particular jointed-arm robots, comprising a controller (4) and comprising at least one welding gun (10) having electrodes (11, 12), wherein a plurality of weld spots (15) are set along a path (16) and the workpiece (2) and the welding gun (10) can be moved relative to one another with a displacement movement (19) between the weld spots (15), wherein the welding device (1) is controlled in such a way that the workpiece (2) and the welding gun (10) are moved relative to one another when setting the weld spots (15) along the path (16), **characterized in that** control is effected in such a way that the workpiece (2) and the welding gun (10) are rotated relative to one another about the weld spot (15) when the welding gun (10) is closed.

10. Device according to Claim 9, **characterized in that** the welding device (1) has a control program for carrying out the method according to one of Claims 1 to 8.

## Revendications

1. Procédé pour le soudage électrique par points de pièces (2) au moyen de pinces de soudage (10) avec des électrodes (11, 12), dans lequel on pose plusieurs points de soudage (15) le long d'une piste (16) et on déplace la pièce (2) et la pince de soudage (10) l'une par rapport à l'autre en un mouvement décalé (19) entre les points de soudage (15) au moyen d'un ou de plusieurs robots à plusieurs axes (3), en particulier des robots à bras articulés, dans lequel on déplace la pièce (2) et la pince de soudage (10) l'une par rapport à l'autre le long de la piste (16) lors de la pose des points de soudage (15), **caractérisé en ce que** l'on fait tourner la pièce (2) et la pince de soudage (10) l'une par rapport à l'autre autour du point de soudage (15) avec la pince de soudage (10) fermée.

2. Procédé selon la revendication 1, **caractérisé en ce que** l'on fait tourner la pièce (2) et la pince de soudage (10) l'une par rapport à l'autre autour de l'axe d'électrode (13) s'étendant entre les électrodes pressées (11, 12) avec la pince de soudage (10) fermée.

3. Procédé selon la revendication 1 ou 2, **caractérisé en ce que** l'on oriente le mouvement de rotation autour du point de soudage (15) dans la direction de progression (17) de la piste (16).

4. Procédé selon l'une quelconque des revendications précédentes, **caractérisé en ce que** l'on fait tourner la pièce (2) et la pince de soudage (10) l'une par rapport à l'autre lors de l'ouverture de la pince de soudage (10).

5. Procédé selon l'une quelconque des revendications précédentes, **caractérisé en ce que** l'on fait tourner la pièce (2) et la pince de soudage (10) l'une par rapport à l'autre lors de la fermeture de la pince de soudage (10).

6. Procédé selon l'une quelconque des revendications précédentes, **caractérisé en ce que** le robot (3) exécute avec ses premiers axes principaux I, II, III un mouvement de guidage essentiellement constant (20) le long de la piste (16) et avec sa main robotique à plusieurs axes (9) un mouvement de compensation superposé.

7. Procédé selon l'une quelconque des revendications précédentes, **caractérisé en ce que** le mouvement de compensation de la main robotique (9) est un mouvement asservi (21) autour du point de soudage (15) avec la pince de soudage (10) fermée.

8. Procédé selon l'une quelconque des revendications précédentes, **caractérisé en ce que** le mouvement de compensation de la main robotique (9) est un mouvement d'orientation (22) autour du point d'articulation de la main (18) en direction du point de soudage suivant (15) avec la pince de soudage (10) ouverte.

9. Dispositif pour le soudage électrique par points de pièces (2) avec un ou plusieurs robots à plusieurs axes (3), en particulier des robots à bras articulés, avec une commande (4) et avec au moins une pince de soudage (10) munie d'électrodes (11, 12), dans lequel plusieurs points de soudage (15) sont posés le long d'une piste (16) et la pièce (2) et la pince de soudage (10) sont mobiles l'une par rapport à l'autre en un mouvement décalé (19) entre les points de soudage (15), dans lequel le dispositif de soudage (1) est commandé de telle manière que la pièce (2) et la pince de soudage (10) soient déplacées l'une par rapport à l'autre lors de la pose des points de soudage (15) le long de la piste (16), **caractérisé en ce que** la commande est effectuée de telle manière que la pièce (2) et la pince de soudage (10) tournent l'une par rapport à l'autre autour du point de soudage (15) avec la pince de soudage (10) fermée.

10. Dispositif selon la revendication 9, **caractérisé en ce que** le dispositif de soudage (1) présente un programme de commande pour l'exécution d'un procédé selon l'une quelconque des revendications 1 à 8.
